(19) Europäisches Patentamt

European Patent Office

Office européen des brevets

(11) EP 0 937 331 B1

(12) EUROPÄISCHE PATENTSCHRIFT

(45) Veröffentlichungstag und Bekanntmachung des Hinweises auf die Patenterteilung:
24.01.2001 Patentblatt 2001/04

(21) Anmeldenummer: 97949872.2

(22) Anmeldetag: 06.11.1997

(51) Int Cl.7: **H02P 21/00**

(86) Internationale Anmeldenummer:
PCT/DE97/02571

(87) Internationale Veröffentlichungsnummer:
WO 98/21817 (22.05.1998 Gazette 1998/20)

(54) **VERFAHREN UND VORRICHTUNG ZUR BESTIMMUNG EINER DREHZAHL EINER GEBERLOSEN, FELDORIENTIERT BETRIEBENEN DREHFELDMASCHINE**

METHOD AND DEVICE FOR DETERMINING THE ROTATIONAL SPEED OF A POLYPHASE MACHINE OPERATING WITH FIELD ORIENTATION AND WITHOUT A SENSOR

PROCEDE ET DISPOSITIF PERMETTANT DE DETERMINER LE NOMBRE DE TOURS D'UNE MACHINE POLYPHASEE EXEMPTE DE CAPTEUR ET FONCTIONNANT AVEC ORIENTATION DU CHAMP

(84) Benannte Vertragsstaaten:
**DE FR GB**

(30) Priorität: **11.11.1996 DE 19646457**

(43) Veröffentlichungstag der Anmeldung:
**25.08.1999 Patentblatt 1999/34**

(73) Patentinhaber: SIEMENS AKTIENGESELLSCHAFT
80333 München (DE)

(72) Erfinder:
• HOFFMANN, Frank
D-91315 Höchstadt (DE)
• DEPENBROCK, Manfred
D-44797 Bochum (DE)

(56) Entgegenhaltungen:
DE-A- 19 531 771

• BAADER U ET AL: "DIRECT SELF CONTROL (DSC) OF INVERTER-FED INDUCTION MACHINE: A BASIS FOR SPEED CONTROL WITHOUT SPEED MEASUREMENT" 1.Mai 1992 , IEEE TRANSACTIONS ON INDUSTRY APPLICATIONS, VOL. 28, NR. 3, PAGE(S) 581 - 588 XP000306107 siehe Seite 584, Absatz III
• JIANG J ET AL: "SPEED SENSORLESS AC DRIVE FOR HIGH DYNAMIC PERFORMANCE AND STEADY STATE ACCURACY" 6.November 1995 , PROCEEDINGS OF THE 1995 IEEE IECON: INTERNATIONAL CONFERENCE ON INDUSTRIAL ELECTRONICS, CONTROL, AND INSTRUMENTATION, ORLANDO, NOV. 6 - 10, 1995 SIGNAL PROCESSING AND CONTROL, ROBOTICS VISION AND SENSORS, EMERGIN TECHNOLOGIES, AND FACTORY AUTOMATION, , VOL., INSTITUTE OF ELECTRICAL AND ELECTRONICS ENGINEERS XP000559336 siehe Seite 1032, Absatz 4.2 - Seite 1033, Absatz 4.3; Abbildung 9

**Beschreibung**

Die Erfindung bezieht sich auf ein Verfahren zur Bestimmung einer Drehzahl einer geberlosen, feldorientiert betriebenen Drehfeldmaschine und auf eine Vorrichtung zur Durchführung des Verfahrens gemäß Oberbegriff des Anspruchs 1 bzw. 10.

Ein Verfahren gemäß Oberbegriff des Anspruchs 1 und eine Vorrichtung zur Durchführung dieses Verfahrens gemäß Oberbegriff des Anspruchs 10 ist aus der älteren deutschen Patentanmeldung mit dem amtlichen Aktenzeichen 195 31 771.8 bekannt (DE-A-19531771, Offenlegungstag : 6.3.97).

Bei diesem bekannten Verfahren werden ein ermittelter Statorstrom-Modellraumzeiger und ein Statorstrom-Istraumzeiger jeweils mit einem konjungiert komplexen Bezugsraumzeiger multipliziert und die Imaginäranteile dieser Produkte miteinander verglichen. Eine auftretende Regelabweichung im Imaginäranteil der gebildeten Produkte ist ein Maß für die Abweichung der Modell-Rotorwinkelgeschwindigkeit von der Ist-Rotorwinkelgeschwindigkeit. Diese Regelabweichung wird mit einem Ausgleichsregler zu Null geregelt, so daß bei Übereinstimmung der Systemparameter der realen Drehfeldmaschine und des Maschinenmodells auch die Modell-Rotorwinkelgeschwindigkeit gleich der Ist-Rotorwinkelgeschwindigkeit ist. Die Realanteile dieser Produkte werden nur bei kleinen Statorfrequenzen miteinander verglichen, wobei die ermittelte Regelabweichung im Realanteil der gebildeten Produkte zur Verstellung des Systemparameters Modell-Statorwiderstand benutzt wird. Dadurch ist eine korrekte Verstellung der Modell-Rotorwinkelgeschwindigkeit bei kleinen Statorfrequenzen der Drehfeldmaschine möglich. Bei diesen kleinen Statorfrequenzen sind bei vorgebbarer Statorspannung die Ströme der realen Maschine und die des Maschinenmodells praktisch nur vom Parameter Statorwiderstand und Modell-Statorwiderstand abhängig.

Ein Nachteil dieses bekannten Verfahrens ist, daß bei hohen im Bereich des Kippmoments liegenden Drehmomenten sich das Drehmoment und somit die Wirkkomponente des Statorstromes bei weiterer Erhöhung der Rotorkreisfrequenz nur noch geringfügig ändert und beim Überschreiten des Kippunktes die Regelabweichung ihr Vorzeichen umdreht. Das hat zur Folge, daß die Streckenverstärkung zu Null und jenseits des Kippunktes sogar negativ wird, so daß aus einer Gegenkopplung eine Mitkopplung wird. Damit kann ein Kippen der Drehfeldmaschine mit diesem bekannten Verfahren und der Vorrichtung zur Durchführung dieses Verfahrens nicht mehr verhindert werden.

Ein weiterer Nachteil dieses Verfahrens besteht darin, daß ausgehend von einer Statorfrequenz Null bei extrem langsamer Änderung der Drehzahl die Modell-Rotorwinkelgeschwindigkeit mit diesem bekannten Verfahren nicht mehr bestimmt werden kann.

Außerdem hängt die Übereinstimmung der identifizierten Drehzahl mit der Maschinendrehzahl entscheidend von der Güte des verwendeten Maschinenmodells ab. Die im Modell verwendeten Parameter müssen deshalb zur korrekten Nachbildung der Verhältnisse in der Maschine betriebs- und arbeitspunktabhängig nachgeführt werden. Dabei müssen insbesondere der Rotor- und Statorwiderstand aufgrund veränderter Wicklungstemperaturen nachgeführt werden. Da auf eine Temperaturmessung der jeweiligen Wicklung verzichtet werden soll, müssen die Widerstände online identifiziert werden. In der angegebenen älteren deutschen Patentanmeldung wurde bereits eine Methode zur Statorwiderstandsermittlung angegeben, die insbesondere bei kleinen Statorfrequenzen notwendig ist. Der Einfluß des Statorwiderstandes im mittleren und oberen Frequenzbereich ist gering.

Eine Identifikation des Rotorwiderstandes ist im quasi stationären Betrieb nicht möglich, da ein fehlerhaft nachgebildeter Rotorwiderstand von einer falsch identifizierten Drehzahl im Statorstrom nicht unterschieden werden kann. Die Temperatur der Rotorwicklung ist meßtechnisch nicht einfach erfaßbar, so daß häufig Stator- und Rotorwicklungstemperatur gleichgesetzt werden, was jedoch nur in erster Näherung gewährleistet ist. Ein fehlerhafter Rotorwiderstand führt jedoch zu einer falsch identifizierten Drehzahl, so daß dies insbesondere bei drehgeberlosem Betrieb nicht toleriert werden kann.

Der Erfindung liegt nun die Aufgabe zugrunde, das bekannte Verfahren und die bekannte Vorrichtung zur Bestimmung einer Drehzahl einer geberlosen, feldorientiert betriebenen Drehfeldmaschine derart weiterzubilden, daß die vorgenannten Nachteile nicht mehr auftreten.

Diese Aufgabe wird durch die kennzeichnenden Merkmale des Anspruchs 1 bzw. 10 gelöst.

Dadurch, daß die ermittelte Regelabweichung im Realanteil der Produkte zur Identifikation der Drehzahl herangezogen wird, weist im Bereich des Kippmoments, das üblicherweise nur im Bereich hoher Drehzahlen gefordert wird, die Streckenverstärkung ihren größten Wert bei eindeutig bestimmtem Vorzeichen auf. Im Bereich kleiner Rotorfrequenzen tritt allerdings eine deutlich reduzierte Streckenverstärkung auf. Aus diesem Grund werden die ermittelten Regelabweichungen im Imaginäranteil und Realanteil der gebildeten Produkte jeweils mit einem Faktor gewichtet und aufsummiert, so daß von kleinen bis sehr hohen Drehzahlen die Drehzahl korrekt identifiziert werden kann. Damit kann ein Kippen der Maschine jederzeit verhindert werden.

Bei einem vorteilhaften Verfahren gemäß den Merkmalen des Anspruchs 2 wird ein zusätzlicher Wert zur Summen-Regelabweichung addiert. Dieser zusätzliche Wert wird mittels einer Flußbetragsmodulation bestimmt, wobei dieser Wert zum einen von der gewählten Amplitude und der Frequenz der Flußbetragsmodulation und zum anderen maßgeblich von der Drehzahlabweichung zwischen der realen Drehfeldmaschine und des Maschinenmodells abhängt.

Je größer der Drehzahlfehler ist, um so größer ist der Wert, der zur Summen-Regelabweichung addiert wird.

Mit diesem vorteilhaften Verfahren kann unabhängig von der Güte der verwendeten Meßglieder ausgehend von einer Statorfrequenz Null bei extrem langsamer Änderung der Drehzahl der Drehfeldmaschine diese Drehzahl exakt identifiziert werden.

Bei einem weiteren vorteilhaften Verfahren gemäß den Merkmalen des Anspruchs 3 wird ebenfalls aufgrund einer Flußbetragsmodulation ein zusätzlicher Wert gebildet, der zur Verstellung des Modell-Rotorwiderstandes verwendet wird. Da der durch Flußbetragsmodulation zusätzlich bestimmte Wert zur Drehzahlidentifizierung im mittleren und oberen Frequenzbereich nicht benötigt wird, wird in diesem Frequenzbereich der zusätzliche Wert zur Verstellung des Modell-Rotorwiderstandes verwendet. Dadurch wird die durch einen fehlerhaft nachgebildeten Rotorwiderstand bedingte fehlerhafte Identifikation der Drehzahl eliminiert, so daß in diesem Frequenzbereich die Drehzahl immer korrekt identifiziert wird.

Durch das so modifizierte bekannte Verfahren zur Bestimmung einer Drehzahl einer geberlosen, feldorientiert betriebenen Drehfeldmaschine kann man nun die Drehzahl der Drehfeldmaschine ausgehend von Statorfrequenz Null bis zu sehr hohen Statorfrequenzen immer exakt identifizieren.

Zur weiteren Erläuterung der Erfindung wird auf die Zeichnung Bezug genommen, in der ein Ausführungsbeispiel einer Vorrichtung zur Durchführung des erfindungsgemäßen Verfahrens zur Bestimmung einer Drehzahl einer geberlosen, feldorientiert betriebenen Drehfeldmaschine schematisch veranschaulicht ist.

FIG 1       zeigt eine Prinzipdarstellung einer Induktionsmaschine, die über einen Pulsstromrichter mit im wesentlichen konstanter Gleichspannung zwischen den Eingangsanschlüssen gespeist wird, die

FIG 2       zeigt ein Blockschaltbild einer besonders vorteilhaften Vorrichtung zur Durchführung des erfindungsgemäßen Verfahrens und in den

FIG 3 und 4       sind die Zusammenhänge bei der Modulation des Statorflußbetrages dargestellt.

Im nachfolgenden Beschreibungsteil werden eine komplexe Größe durch einen Unterstrich, ein Raumzeiger durch einen Pfeil, eine Modellgröße durch ein Dach und eine konjugiert komplexe Größe durch einen Stern gekennzeichnet.

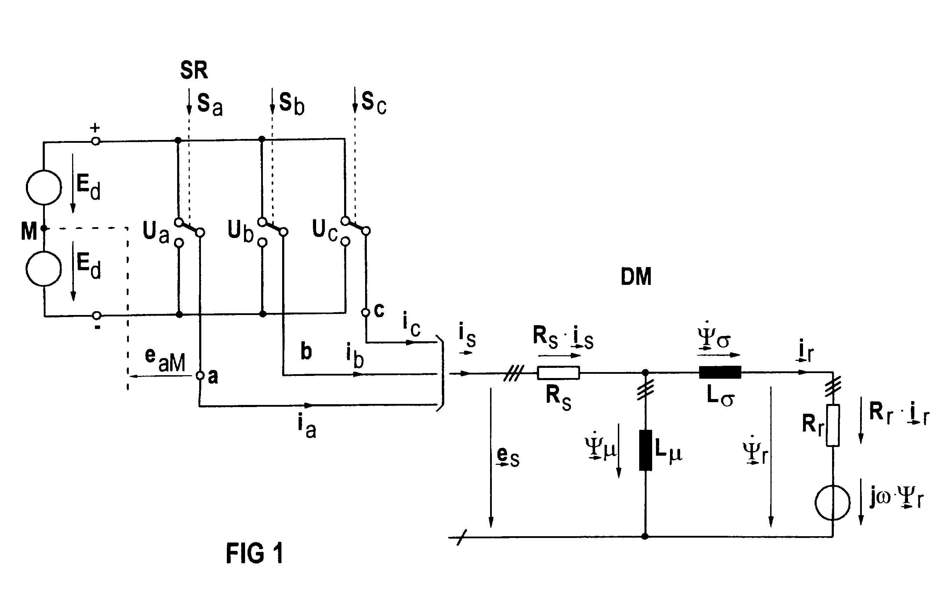

In der Figur 1 wird ein Pulsstromrichter SR symbolisch durch die Umschalter $U_a$, $U_b$, $U_c$ dargestellt. Die Umschalter $U_a$, $U_b$, $U_c$ verbinden in Abhängigkeit von den zweiwertigen Steuersignalen $S_a$, $S_b$, $S_c$ die Anschlüsse a, b, c mit dem positiven Anschluß "+" auf der Eingangsseite des Pulsstromrichters SR, wenn das zugehörige Schaltsignal den Wert Eins hat bzw. mit dem negativen Anschluß "-", wenn der Wert des Schaltsignals gleich Null ist. Gemessen gegen das mittlere Potential M zwischen den Eingangsanschlüssen "+" und "-" kann ein zur Verbindung mit der Induktionsmaschine DM dienender Anschluß nur die Spannungswerte $+E_d$ oder $-E_d$ annehmen. Durch Pulsmodulation können in bekannter Weise die über ein Modulationsspiel mit der Dauer $T_m$ gebildeten Mittelwertspannungen $-\bar{e}_{aM}$, $-\bar{e}_{bM}$, $-\bar{e}_{cM}$ jeden Wert zwischen $+E_d$ und $-E_d$ annehmen. Die Induktionsmaschine DM ist symbolisch durch ihr Raumzeiger-Ersatzschaltbild ($\Gamma$-Raumzeiger-Ersatzschaltbild) im ständerfesten Bezugssystem dargestellt.

Mit den üblichen Vereinfachungen genügen folgende Parameter zur vollständigen Systembeschreibung der Induktionsmaschine:

Der Statorwiderstand $R_S$, der Rotorwiderstand $R_r$, die Magnetisierungsinduktivität $L_\mu$, die Streuinduktivität $L_\sigma$ sowie die elektrische Winkelgeschwindigkeit $\omega$ des Rotors, wobei $\omega = \Omega \times p$ und mit $\Omega$ die mechanische Winkelgeschwindigkeit des Rotors relativ zum Stator und mit p die Polpaarzahl der Maschine bezeichnet ist. Die Widerstandsparameter $R_S$ und $R_r$ ändern sich mit den zugehörigen Wicklungstemperaturen und die Induktivitäten L, und $L_\sigma$ mit den Flußverkettungen.

Aus den Größen in den Strängen a, b, c erhält man, dargestellt am Beispiel der Statorströme $i_a$, $i_b$ und $i_c$, die orthogonalen Koordinaten des komplexen Statorstrom-Raumzeigers $\vec{i}_S$ nach folgenden Vorschriften:

$$i_{S\alpha} = -i_b - i_c,$$

$$i_{S\beta} = \frac{1}{\sqrt{3}}(i_b - i_c) \tag{1}$$

$$\vec{i}_S = i_\alpha + j \bullet i_\beta$$

$$\text{mit} \quad j = \sqrt{-1}$$

Um das pro Polpaar gebildete Drehmoment M zu berechnen, gibt es viele Möglichkeiten, z.B.

$$M \; = \; \mathrm{Im} \; \cdot \; \underline{M} \; = \; \frac{3}{2} \, (\, \underline{\Psi}_{\mu}^{*} \; \cdot \; \underline{i}_{S} ) \qquad\qquad (2)$$

$$\mathrm{mit} \; = \; \underline{\Psi}_{\mu}^{*} \; = \; \Psi_{\mu\alpha} \; - \; j\Psi_{\mu\beta}$$

Der Realteil der komplexen Größe $\underline{M}$, der später behandelt wird, trägt zum wirklichen Drehmoment nichts bei und soll deshalb als Blindmoment BG bezeichnet werden.

Anstelle des konjugiert komplexen Raumzeigers $\underline{\Psi}_{\mu}^{*}$ der Ständerflußverkettung kann in Gleichung (2) auch der aus den Rotorflußverkettungen abgeleitete konjugiert komplexe Raumzeiger $\underline{\Psi}_{*}^{*}$ eingesetzt werden, oder auch der Raumzeiger $\underline{\Psi}_{*}^{*} / | \underline{\Psi}_{*}^{*} |$, der konjugiert komplexe Wert des Einheitsraumzeigers in Richtung des Rotorflußraumzeigers $\underline{\Psi}_{*}^{*}$.

Alle diese Produkte aus dem Statorstromraumzeiger $\underline{i}_{S}$ und einer komplexen "Transformationsgröße" $\underline{T}^{*}$ haben die Eigenschaft, daß ihr Imaginärteil dem wirklichen Drehmoment proportional ist, d.h. bei stationärem symmetrischem Betrieb mit zeitlich harmonisch schwingenden Zustandsgrößen eine zeitlich konstante Gleichgröße bildet. Entsprechendes gilt für die "Blindgröße", dem Realteil der Produkte. Bezeichnet man allgemein den Raumzeiger der konjugiert-komplexen Transformationsgröße als

$\underline{\hat{T}}^{*} =$ Bezugsgröße zur Aufspaltung des Statorstromes in

$\underline{i}_{S\perp} =$ (Drehmoment-)Wirkkomponente des Statorstromes und in

$\underline{i}_{S\parallel} =$ (Drehmoment-)Blindkomponente des Statorstromes,

so gilt

$$\underline{\hat{T}}^{*} \cdot \underline{i}_{S} \; = \; \underline{\hat{T}}^{*} \cdot \underline{i}_{S\perp} \; + \; \underline{\hat{T}}^{*} \cdot \underline{i}_{S\parallel}$$

$$\mathrm{Im}\left( \underline{\hat{T}}^{*} \cdot \underline{i}_{S} \right) = \mathrm{Im}\left( \underline{\hat{T}}^{*} \cdot \underline{i}_{S\perp} \right) \; = \; WG \qquad\qquad \text{(Momenten-Wirkgröße)}$$

$$\mathrm{Re}\left( \underline{\hat{T}}^{*} \cdot \underline{i}_{S\perp} \right) = \mathrm{Re}\left( \underline{\hat{T}}^{*} \cdot \underline{i}_{S\parallel} \right) \; = \; BG \qquad\qquad \text{(Momenten-Blindgröße)}$$

$$(3)$$

Um festzustellen, ob die Drehmomente M und $\hat{M}$ von realer Maschine DM und Maschinenmodell und damit, bei sonst gleichen Systemparametern, auch die Drehzahlen $\omega$ und $\hat{\omega}$ übereinstimmen, braucht man nur die beiden Raumzeiger der Statorströme $\underline{i}_{S}$ und $\underline{\hat{i}}_{S}$ mit der gleichen konjugiert komplexen Bezugsgröße $\underline{T}^{*}$ zu multiplizieren und die Imaginärteile zu vergleichen:

$$\text{Im}\left[\hat{\underset{\rightarrow}{T}}^{*} \cdot \hat{\underset{\rightarrow}{i}}_{s}\right] - \text{Im}\left[\hat{\underset{\rightarrow}{T}}^{*} \cdot \underset{\rightarrow}{i}_{s}\right] = \Delta\perp \tag{4}$$

Wenn die Größe $\Delta\perp$ durch Verstellung des Modellparameters $\hat{\omega}$ zu Null gemacht wird, dann stimmen auf jeden Fall die zur komplexen Bezugsgröße $\underset{\rightarrow}{T}^{*}$ orthogonalen Statorstromkomponenten $\hat{i}_{S\perp}$ und $i_{S\perp}$ überein, für die Winkelgeschwindigkeiten $\hat{\omega}$ und $\omega$ gilt dies mit Sicherheit dann, wenn auch alle anderen Systemparameter bei realer Maschine DM und beim Maschinenmodell gleich sind.

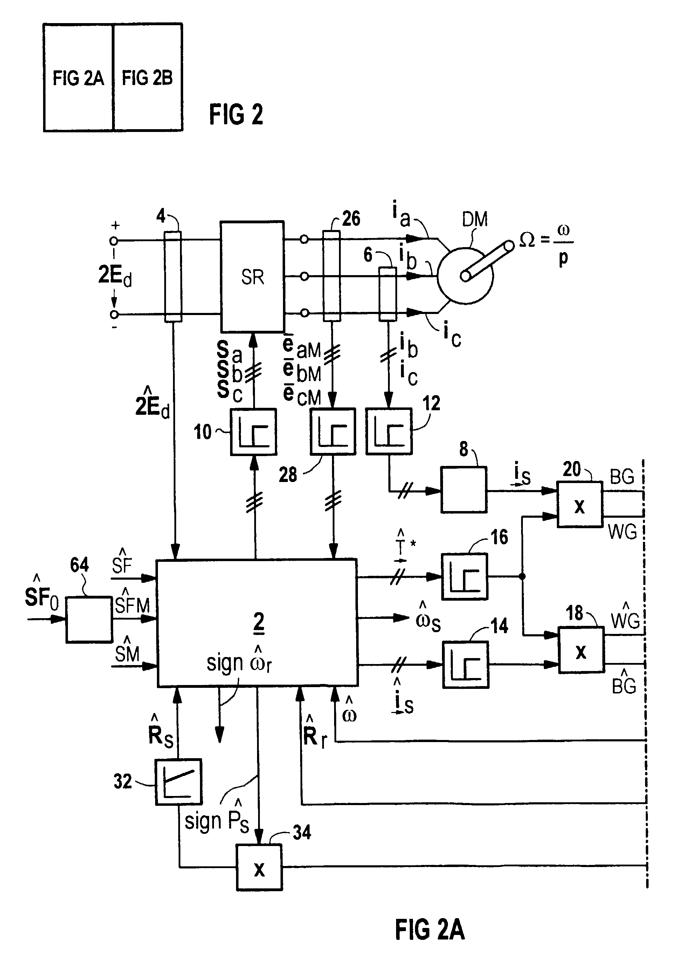

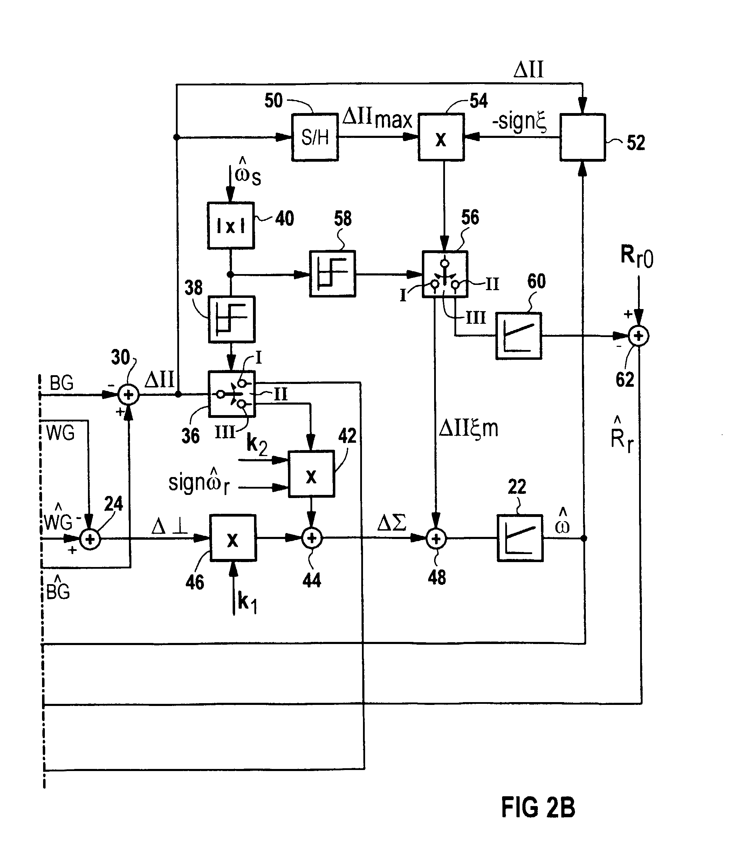

Die Figur 2 zeigt beispielhaft, wie ein übliches Verfahren zum Steuern und Regeln einer Induktionsmaschine DM zu ergänzen ist, um auf eine direkte Messung der Winkelgeschwindigkeit $\Omega$ an der Maschine DM verzichten zu können. Dabei wird vorausgesetzt, daß ein vollständiges Maschinenmodell den Raumzeiger $\hat{\underset{\rightarrow}{i}}_{S}$ der Modell-Statorströme beinhaltet und außerdem einen Bezugs-Raumzeiger $\underset{\rightarrow}{T}$, dessen Richtung jederzeit mit der des Raumzeigers $\underset{\rightarrow}{\Psi}_{\mu}$, der Ständerflußverkettung oder der von $\underset{\rightarrow}{\Psi}_{r}$ der Rotorflußverkettung oder einer dazwischenliegenden Richtung übereinstimmt.

Die bekannte Signalverarbeitung 2, die unter anderem einen Modulator, eine Regelung und ein vollständiges Maschinenmodell enthält, realisiert normalerweise folgende Funktionen in ständig aufeinanderfolgenden Berechnungsspielen mit der konstanten Dauer $T_c$:

Aus dem Sollwert $\hat{s_M}$ für die Stärke des magnetischen Drehfeldes und dem Sollwert $\hat{s_M}$ für das Drehmoment wird der Raumzeiger $\hat{\underset{\rightarrow}{e}}_{s}$ der Ständerspannungen $\bar{e}_{aM}$, $\bar{e}_{bM}$ und $\bar{e}_{cM}$ berechnet, die notwendig sind, die Differenzen zwischen Soll- und Istwert zu reduzieren oder auf Null zu halten, wobei ein Schätzwert $\hat{\omega}$ der Rotorwinkelgeschwindigkeit benötigt wird.

Ausgehend von der über das Meßglied 4 gemessenen aktuellen Eingangsgleichspannung $2E_d$ des Stromrichters SR wird das zugehörige Pulsmuster für die Schaltvariablen $S_a$, $S_b$, $S_c$ berechnet, wobei die inneren stromabhängigen Spannungsabfälle des Stromrichters SR berücksichtigt werden. Dazu muß vorher der Statorstrom-Raumzeiger $\hat{\underset{\rightarrow}{i}}_{S}$ des Maschinenmodells berechnet und dann zu Strangwerten $\hat{i}_a$, $\hat{i}_b$, $\hat{i}_c$ umgeformt werden.

Um den Statorstrom-Modellraumzeiger $\hat{\underset{\rightarrow}{i}}_{s}$ und alle anderen benötigten oder gewünschten Größen berechnen zu können, müssen zuvor nach den Reglern des Systems die Zustandsgrößen, z.B. Raumzeiger der Ständerflußverkettung $\underset{\rightarrow}{\Psi}_{\mu}$ und Raumzeiger der Läuferflußverkettung $\underset{\rightarrow}{\Psi}_{r}$ neu bestimmt werden. Am Ende des Berechnungsspiels mit der Dauer $T_c$ liegt das Pulsmuster der Schaltvariablen $S_a$, $S_b$, $S_c$ fest. Die zugehörigen Schalthandlungen werden innerhalb des nächsten Modulationsspiels der Gesamtdauer $T_m = N \times T_c$, wobei N eine ganze Zahl ist, an den zuvor berechneten Zeitpunkten von den Halbleiterschaltern des Stromrichters SR durchgeführt. Am Ende des betrachteten Berechnungsspiels ist nicht nur der zukünftige Wert des Statorstrom-Modellraumzeigers $\hat{\underset{\rightarrow}{i}}_{S}$ am Ende des gerade begonnenen Modulationsspiels bekannt, aus dem errechneten Pulsmuster kann auch der nächste Zwischenwert des Statorstrom-Modellraumzeigers $\hat{\underset{\rightarrow}{i}}_{S}$, der am Ende des nächsten Berechnungsspiels auftreten wird, bestimmt und abgespeichert werden. Die zugehörigen Ströme $i_a$, $i_b$ und $i_c$ in der realen Maschine DM treten mit einer Verzögerung von $T_c$ auf. Bis sie von dem Meßglied 6 erfaßt und am Koordinatenwandler 8 umgeformt zur Verfügung stehen, vergeht üblicherweise eine weitere Totzeit mit der Dauer $T_c$ oder einem kleinen Vielfachen dieser Dauer. Diese Effekte werden in Fig. 2 durch die Totzeitglieder 10 und 12 symbolisch berücksichtigt. Unabhängig von der Zahl N der Berechnungszyklen, die in einem Modulationszyklus liegen, kann in jedem Berechnungszyklus der neue Wert des Statorstrom-Istraumzeigers $\underset{\rightarrow}{i}_{S}$, der gemessenen Maschinenströme mit dem zugeordneten Statorstrom-Modellraumzeiger $\hat{\underset{\rightarrow}{i}}_{S}$ der Ströme des Maschinenmodells verglichen werden, der bereits einige Rechenzyklen zuvor berechnet und abgespeichert wurde, was in Fig. 2 durch das Totzeitglied 14 mit der Totzeit $T_{\Sigma}$ symbolisiert wird, die sich aus der Summe der anderen Totzeiten ergibt.

Wird als Bezugsgröße zur Aufspaltung des Statorstrom-Raumzeigers $\underset{\rightarrow}{i}_{S}$ und des Statorstrom-Modellraumzeigers $\hat{\underset{\rightarrow}{i}}_{S}$ ein ebenfalls um $T_{\Sigma}$ zurückliegender (Totzeitglied 16) konjugiert komplexer Wert des als Bezugsgröße gewählten Raumzeigers $\underset{\rightarrow}{T}$ benutzt, um in den Multipliziergliedern 18 und 20 gemäß Gleichung (3) die Größen

$$\hat{WG} = \text{Im}\left(\hat{\underset{\rightarrow}{T}}^{*} \cdot \hat{\underset{\rightarrow}{i}}_{s}\right); \hat{BG} = \text{Re}\left(\hat{\underset{\rightarrow}{T}}^{*} \cdot \hat{\underset{\rightarrow}{i}}_{s}\right)$$

bzw.

$$WG = Im\left(\hat{\underset{\rightarrow}{T}}^{*}\cdot \underset{\rightarrow}{i}_{S}\right); BG = Re\left(\hat{\underset{\rightarrow}{T}}^{*}\cdot \underset{\rightarrow}{i}_{S}\right)$$

zu bilden, so stimmen die Wirkgrößen WG und $\hat{w}_G$ mit den Drehmomenten von realer Maschine DM und Maschinenmodell direkt überein bzw. bis auf einen gleichen Faktor überein. Zur Adaption des Parameters Rotorgeschwindigkeit $\hat{\omega}$ des Maschinenmodells wird ein Ausgleichsregler 22 vorgesehen, dessen Eingangsgröße, die Regelabweichung $\triangle\perp$ der Imaginäranteile $\hat{w}_G$ und WG der gebildeten Produkte, im Vergleicher 24 gebildet wird. Normalerweise sind die den Drehmomenten entsprechenden Größen WG und $\hat{w}_G$ selbst im stationären Betrieb zeitlich nicht konstant, weil die Eingangsspannungen für reale Maschine und für das Maschinenmodell pulsmoduliert verlaufen. Wenn aber beide Spannungen ebenso übereinstimmen wie alle Systemparameter, dann ist im ausgeglichenen Zustand diese Regelabweichung $\triangle\perp$ theoretisch gleich Null, praktisch mit guter Näherung. Das bedeutet, daß z.B. Verstärkung und Nachstellzeit des Ausgleichsreglers 22 so gewählt werden können, daß sich ein deutlich besseres dynamisches Verhalten als bei anderen Verfahren ergibt. In diesem Zusammenhang spielt die erfindungsgemäße Maßnahme, im Pfad der Signale $\hat{\underset{\rightarrow}{i}}_S$ und $\underset{\rightarrow}{T}^{*}$ eine Totzeit wirken zu lassen, eine wesentliche Rolle.

Wie schon erwähnt, wird das Pulsmuster für die Schaltsignale $S_a$, $S_b$, $S_c$ so berechnet, daß sich mit der aktuellen Eingangsgleichspannung $2E_d$ und unter Berücksichtigung der inneren Spannungsabfälle des Stromrichters SR der gewünschte Mittelwert $\bar{e}_S$ des Maschinenspannungs-Raumzeigers für das nächste Modulationsspiel ergibt. Für den Fall, daß die Genauigkeit dieser Steuerung nicht ausreicht, um für die reale Maschine DM und das Maschinenmodell den vorausgesetzten gleichen Verlauf des Raumzeigers der Eingangsspannungen zu gewährleisten, können über ein Meßglied 26 die über ein Modulationsspiel gebildeten Mittelwerte der drei Ausgangsspannungen $\bar{e}_{aM}$, $\bar{e}_{bM}$ und $\bar{e}_{cM}$ des Stromrichters SR gemessen und als Istwerte für drei Spannungskorrektur-Regelungen verwendet werden, wobei allerdings wiederum eine Totzeit auftritt, die in Figur 2 durch das Totzeitglied 28 berücksichtigt wird.

Um in anderer Hinsicht ein möglichst robustes Verfahren zu realisieren, ist es vorteilhaft, für die Bezugsgröße $\underset{\rightarrow}{T}^{*}$ den konjugiert komplexen Raumzeiger der Ständerflußverkettungen $\underset{\rightarrow}{\Psi}^{*}$ auszuwählen. Der Parameter $L_\mu$ zeigt sehr starke Abhängigkeit von den Flußverkettungen, üblicherweise wird aber nur die Abhängigkeit der Grundschwingungsinduktivität $L_{\mu f}$ vom Betrag des Raumzeigers $\underset{\rightarrow}{\Psi}_\mu$ berücksichtigt, weil eine genaue Nachbildung der augenblicklichen Magnetisierungsströme $i_{\mu a,b,c}$ abhängig von den Augenblickswerten der Flußverkettungen zu aufwendig ist. Da die Magnetisierungsströme $i_{\mu a,b,c}$ aber keinen Beitrag zum Drehmoment liefern, solange der Raumzeiger der Magnetisierungsströme $\underset{\rightarrow}{i}_\mu$ richtungsgleich mit dem Raumzeiger $\underset{\rightarrow}{\Psi}_r$ der Rotorflußverkettung bleibt, haben Unterschiede zwischen den Magnetisierungsstrom-Raumzeigern $\underset{\rightarrow}{i}_\mu$ und $\hat{\underset{\rightarrow}{i}}_\mu$ keinen Einfluß auf die Regelabweichung $\triangle\perp$ der Momenten-Wirkgrößen $\hat{w}_G$ und WG und damit auch nicht auf den Zeitverlauf der Ausgangsgröße Rotorwinkelgeschwindigkeit $\hat{\omega}$ des Ausgleichsreglers 22.

Durch die bisher geschilderten Maßnahmen wird sichergestellt, daß die Statorstromkomponenten $\underset{\rightarrow}{i}_{S\perp}$ und $\hat{\underset{\rightarrow}{i}}_{S\perp}$ der realen Drehstrommaschine DM und des Maschinenmodells dynamisch gut und stationär nahezu ideal übereinstimmen, wenn das durch Adaption des Parameters Rotorwinkelgeschwindigkeit $\hat{\omega}$ im Maschinenmodell möglich ist. Bei kleinen Ständerfrequenzen werden bei vorgegebener Spannung die Ströme der realen Maschine DM und auch die des Maschinenmodells stationär praktisch nur durch die Parameter Statorwiderstand $R_S$ und $\hat{R}_S$ bestimmt. Der Statorwiderstand $R_S$ ändert sich sehr stark mit der Wicklungstemperatur, so daß, wenn der Modellwert den Statorwiderständen $\hat{R}_S$ nicht nachgeführt wird, die Regelabweichung $\triangle\perp$ am Eingang des Ausgleichsreglers 22 nicht gleich Null ist, selbst wenn die Modell-Rotorwinkelgeschwindigkeit $\hat{\omega}$ und die Rotorwinkelgeschwindigkeit $\omega$ übereinstimmen. Das heißt, eine korrekte Bestimmung der Modell-Rotorwinkelgeschwindigkeit $\hat{\omega}$ ist dann nicht möglich.

Da durch Verstellen des Parameters Modell-Rotorwinkelgeschwindigkeit $\hat{\omega}$ nichts daran geändert wird, daß die Spannungen der realen Maschine DM und des Maschinenmodells so gut wie technisch möglich übereinstimmen, bleibt bei kleinen Statorfrequenzen die Regelabweichung $\triangle\perp$ so lange von Null verschieden, wie Unterschiede zwischen dem Statorwiderstand $R_S$ und dem Modell-Statorwiderstand $\hat{R}_S$ bestehen.

Durch den Vergleich der bisher nicht benutzten Blindmomente $\hat{b}_G$ und BG, auch Momenten-Blindgrößen genannt, kann dieser Mangel beseitigt werden. Stimmen die Parameter Statorwiderstand $R_S$ und Modell-Statorwiderstand $\hat{R}_S$ z.B. bei niedrigen Frequenzen nicht überein, so führt das bei gleichen Spannungen nicht nur zu Unterschieden bei den drehmomentbildenden Stromkomponenten $\underset{\rightarrow}{i}_{S\perp}$ und $\hat{\underset{\rightarrow}{i}}_{S\perp}$, der realen Maschine DM und des Maschinenmodells, sondern ebenso zu Differenzen zwischen den flußbildenden Stromkomponenten $\underset{\rightarrow}{i}_{S\parallel}$ und $\hat{\underset{\rightarrow}{i}}_{S\parallel}$ der realen Maschine DM und des Maschinenmodells und damit auch zur Ungleichheit der Blindmomente BG und $\hat{b}_G$. Bildet man die Differenz $\triangle\parallel$ zwischen diesen Blindmomenten BG und $\hat{b}_G$ in einem weiteren Vergleicher 30, so kann über einen weiteren Ausgleichsregler 32 der Parameter Modell-Statorwiderstand $\hat{R}_S$ so lange verstellt werden, bis diese ermittelte Regelabweichung $\triangle\parallel$ den Wert Null annimmt. Bei Änderung der Energieflußrichtung, d.h. wenn Bremsleistung an den Stromrichter SR zurückgespeist wird, muß auch der Regelsinn des weiteren Ausgleichsreglers 32 umgekehrt werden. Dazu kann z.B. die Regelabweichung ∆‖ der Momenten-Blindgrößen $\hat{BG}$ und BG mit dem Vorzeichen sign $P_S$ der Statorleistung $P_S$ multipliziert werden, wozu ein Multiplizierglied 34 vorgesehen ist.

Bei mittleren und großen Ständerfrequenzen kann es zweckmäßig sein, die Verstärkungswirkung des Reglers 32 zu verringern.

Diese gebildete Regelabweichung ∆‖ ist über einen Umschalter 36 (Position I) dem weiteren Ausgleichsregler 32 zugeführt, wobei der Steuereingang dieses Umschalters 36 mit einem Ausgang eines Steuergliedes 38 verbunden ist. Eingangsseitig ist dieses Steuerglied 38 mit einem Ausgang eines Betragsbildners 40 verknüpft, an dessen Eingang eine von der Signalverarbeitung 2 ermittelte Modell-Statorfrequenz $\hat{\omega}_S$ ansteht. Der zweite Ausgang (Position III) des Umschalters 36 ist über einen Multiplizierer 42 mit einem zweiten Eingang eines Addierers 44 verbunden. Der erste Eingang dieses Addierers 44 ist mit einem Ausgang eines Multiplizierers 46 verknüpft, der eingangsseitig mit dem Ausgang des Vergleichers 24, an dessen Ausgang die Regelabweichung ∆⊥ der Momenten-Wirkgrößen $\hat{WG}$ und WG ansteht. Ausgangsseitig ist der Addierer 44 über einen weiteren Addierer 48 mit dem Ausgleichsregler 22 verbunden. Jeweils am zweiten Eingang der Multiplizierer 42 und 46 steht ein Gewichtungsfaktor K2 und K1 an. Dem Multiplizierer 42 ist ausgangsseitig noch das Vorzeichen sign $\omega_r$ der geschätzten Rotorkreisfrequenz $\hat{\omega}_r$ zugeführt. Als Umschalter 36 ist ein Umschalter mit neutraler Stellung vorgesehen.

Der weitere Vergleicher 30 ist außerdem einerseits mit einer Einrichtung 50 zur Spitzenwerterfassung und andererseits mit einer Einrichtung 52 zur Vorzeichenerfassung eines Phasenverschiebungswinkels ξ verknüpft. Ein zweiter Eingang dieser Einrichtung 52 zur Vorzeichenerfassung ist mit dem Ausgang des Ausgleichsreglers 22 verbunden. Ausgangsseitig sind diese Einrichtungen 50 und 52 jeweils mit einem Eingang eines Multiplizierers 54 verbunden, der ausgangsseitig mittels eines weiteren Umschalters 56 (Position I) mit einem Eingang des Addierers 48 verknüpft ist. Der Steuereingang dieses weiteren Umschalters 56 ist mit einem Ausgang eines weiteren Steuergliedes 58 verbunden, das eingangsseitig mit dem Ausgang des Betragsbildners 40 verbunden ist. Ein zweiter Ausgang des weiteren Umschalters 56 (Position II) ist mit einem weiteren Ausgleichsregler 60 verknüpft, der ausgangsseitig über einen Addierer 62 mit einem Parametriereingang der Signalverarbeitung 2 verbunden ist. Am zweiten Eingang dieses Addierers 62 steht ein Vorsteuerwert R,0 für die Rotorwiderstandsadaption an. Als Einrichtung 50 zur Spitzenwerterfassung ist ein Abtast-Halte-Glied vorgesehen, wobei die Einrichtung 52 zur Vorzeichenerfassung einen Phasendetektor, einen Vergleicher und einen Invertierer aufweist. Ein Blockschaltbild einer derartigen Einrichtung 52 ist explizit nicht angegeben, da eine derartige Schaltung dem Fachmann bekannt ist. Ebenso bieten sich weitere Ausführungsformen für diese Einrichtung 52 an, die jedoch keinen Einfluß auf das erfindungsgemäße Verfahren haben.

Wie dieser Darstellung zu entnehmen ist, ist der Signalverarbeitung 2 ein Signalgeber 64 vorgeschaltet, an dessen Eingang ein Wert eines Nennstatorflusses $\hat{SF}_0$ der Drehfeldmaschine DM ansteht. Ausgangsseitig steht ein niederfrequent moduliertes Flußbetragssignal $\hat{SFM}$ an, das entsprechend der Beziehung

$$\hat{SFM}^2 = \left[0{,}72 + 0{,}28 \cdot \sin(\omega_m \cdot t)\right] \cdot \hat{SF}_0^2$$

oder entsprechend der Beziehung

$$\hat{SFM} = \left[87{,}5\% + 12{,}5\% \cdot \sin(\omega_m \cdot t)\right] \cdot \hat{SF}_0$$

berechnet wird. Welche Beziehung im Signalgeber 64 verwendet wird, hängt davon ab, ob die Signalverarbeitung 2 radizieren kann oder nicht.

Wie man weiter dieser Darstellung entnehmen kann, werden die Umschalter 36 und 56 in Abhängigkeit vom Wert der Modell-Statorfrequenz $\hat{\omega}_S$ betätigt. Dabei ist nur der absolute Wert der Modell-Statorfrequenz $\hat{\omega}_S$ von Interesse. Deshalb wird vom ermittelten Wert der Modell-Statorfrequenz $\hat{\omega}_S$ der Betrag gebildet, bevor dieser Wert für die Steuerglieder 38 und 58 verwendet wird. Die Umschalter 36 und 56 können in drei Positionen I,II und III verharren.

Bei einer Modell-Statorfrequenz $\hat{\omega}_S$ = 0 befindet sich der Umschalter 36 in der Position II (neutrale Stellung) und der Umschalter 56 in der Position I. Bei einer Modell-Statorfrequenz gemäß $|\hat{\omega}_S|$ > 2% , wobei $\omega_0$ die Typenpunktfrequenz der Drehfeldmaschine DM angibt, befindet sich der Umschalter 5 36 in der Position I und der Umschalter 56 in der Position II. Ist der Betrag der Modell-Statorfrequenz $\hat{\omega}_S$ > 10% $\omega_0$, wechselt der Umschalter 36 in die Position II, wogegen dieser Umschalter 36 in die Position III wechselt, wenn für die Modell-Statorfrequenz $|\hat{\omega}_S|$ > 100 % $\omega_0$ gilt. Bei diesem Wert der Modell-Statorfrequenz $\hat{\omega}_S$ wechselt der Umschalter 56 in die Position III (neutrale Stellung). Befindet sich der Umschalter 36 in der Position II oder der Umschalter 56 in der Position I oder II, so erhält die Signalverarbeitung 2 ein niederfrequent moduliertes Flußbetragssignal $\hat{s}_{FM}$ anstelle des Fluß-Sollwertes $\hat{s}_{SF}$. Es besteht jedoch auch die Möglichkeit, das niederfrequent modulierte Flußbetragssignal $\hat{s}_{FM}$ beispielsweise periodisch für eine vorbestimmte Zeitspanne der Signalverarbeitung 2 zuzuführen.

In Abhängigkeit vom Drehmoment verändern die Gewichtungsfaktoren K1 und K2, deren Werte zwischen Null und Eins variiert werden können, ihre Werte. Der Wert des Gewichtungsfaktors K1 ist bei niedrigen Drehmomenten (< 50% $M_{kipp}$) gleich Eins und der Wert des Gewichtungsfaktors K2 gleich Null. Bei hohen Drehmomenten (80% bis 100% $M_{kipp}$) ist der Wert des Gewichtungsfaktors K1 = 0 und des Gewichtungsfaktors K2 = 1. Der Übergang zwischen diesen beiden Grenzfällen kann dabei entweder kontinuierlich mit steigender Belastung erfolgen oder sprunghaft ab einer bestimmten Belastung geschehen. Bei einer sprunghaften Änderung der Gewichtungsfaktoren K1 und K2 ist es sinnvoll, den Übergang mit einer Hysterese zu versehen und so ein ständiges Wechseln zwischen den verschiedenen Reglereingangsgrößen zu vermeiden. Das benötigte Vorzeichen der Rotorkreisfrequenz $\omega_r$, das auch mit dem Vorzeichen des Drehmomentes übereinstimmt, wird dabei von dem vollständigen Maschinenmodell der Signalverarbeitung 2 ermittelt.

$$0 \leq \left| \hat{\omega}_S \right| \leq 2\ \%\ \omega_0:$$

In diesem Frequenzbereich der Modell-Statorfrequenz $\hat{\omega}_S$ befindet befindet sich der Umschalter 36 in der Position II und der Umschalter 56 in der Position I und der Signalverarbeitung 2 wird das niederfrequent modulierte Flußbetragssignal $\hat{s}_{FM}$ zugeführt. Die Amplitude dieser Statorflußbetragsmodulation wird dabei so festgelegt, daß das mit dem niedrigsten Wert des modulierten Statorflusses erreichbare Drehmoment immer noch höher ist als das beispielsweise in der Traktion bei diesen Statorfrequenzen üblicherweise geforderte maximale Drehmoment bei Nennstatorfluß $\hat{s}_{SF_0}$.

Die Frequenz $\omega_m$ der Flußbetragsmodulation muß dabei zur Vermeidung von Torsionsschwingungen so gewählt werden, daß sie deutlich kleiner als die niedrigste mechanische Resonanzfrequenz des Antriebsstranges ist. Diese liegt beispielsweise in der Traktion für Hochleistungslokomotiven im Bereich von 20 Hz. Ferner sollen Stromverdrängungseffekte im Rotor vermieden werden. Aus diesen Gründen ist es zweckmäßig, z.B. für die Frequenz $\omega_m$ der Flußbetragsmodulation 5 Hz zu wählen. Weil die Eckfrequenz des Drehmomentreglers eines feldorientierten Regelungsverfahrens üblicherweise um mehr als eine Größenordnung höher liegt, kann das Drehmoment jedoch weiterhin problemlos auf seinen gewünschten Wert geregelt werden.

Im Falle einer Differenz zwischen der identifizierten Drehzahl $\hat{\omega}$ und der Drehzahl $\omega$ der Drehfeldmaschine DM tritt aufgrund der Statorflußbetragsmodulation eine von Null verschiedene Regelabweichung $\Delta_\|$ der Momenten-Blindgrößen $\hat{BG}$ und BG in den parallel zur Transformationsgröße gerichteten Statorströmen zwischen Modell und Maschine auf, die dabei einer mit Flußbetragsmodulationsfrequenz $\omega_m$ schwingenden Wechselgröße entspricht. Der Spitzenwert $\Delta_{\|max}$ hängt dabei zum einen von der gewählten Amplitude und der Frequenz der Statorflußbetragsmodulation ab, aber zum anderen auch maßgeblich von der Drehzahlabweichung zwischen Maschine und Modell. Je größer der Drehzahlfehler ist, um so größer ist der auftretende Spitzenwert der Regelabweichung $\Delta_\|$ der Momenten-Blindgrößen BG und $\hat{BG}$, so daß der Spitzenwert $\Delta_{\|max}$ eine zusätzliche Information zur Drehzahlermittlung liefert. Die Informationen Über das Vorzeichen der Drehzahlabweichung ist hierin aber noch nicht enthalten.

Eine auftretende Regelabweichung $\Delta_\perp$ der Momentan-Wirkgrößen WG und $\hat{WG}$, die im Falle einer Drehzahldifferenz $\hat{\omega} - \omega$ zwischen Modell und Maschine bei Flußbetragsmodulation ebenfalls mit der Modulationsfrequenz $\omega_m$ pulsierenden Wechselgröße entspricht, wird durch den Ausgleichsregler 22 ausgeregelt und als pulsierende Drehzahl $\hat{\omega}$ interpretiert. Diese beobachtete Drehkreisfrequenz $\hat{\omega}$ setzt sich dann im allgemeinen aus einem Gleichanteil $\omega_-$ (Mittelwert) und einem überlagerten Wechselanteil $\omega_\sim$ zusammen.

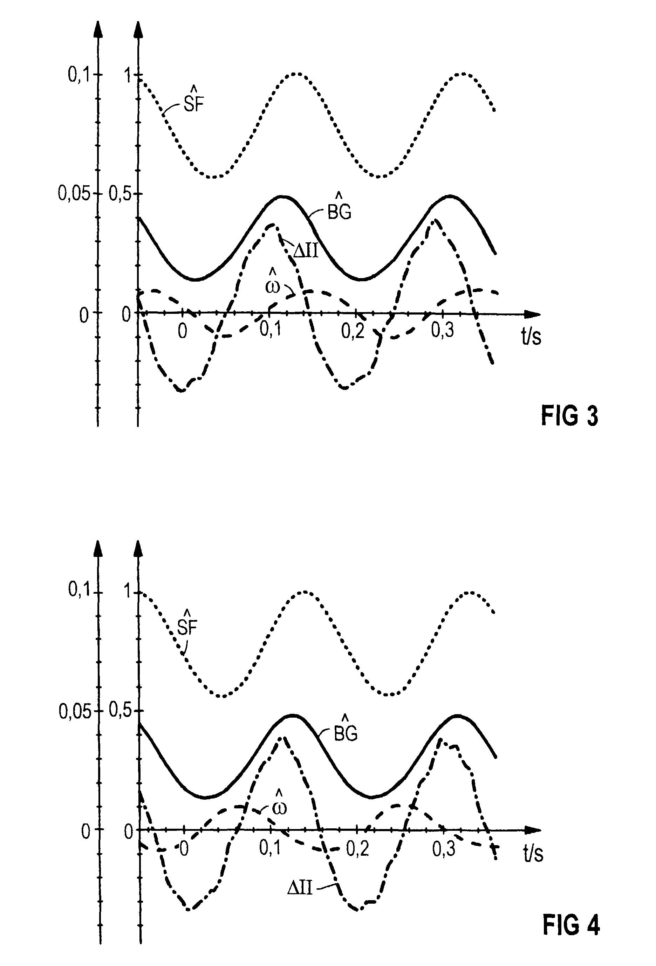

In den FIG 3 und 4 sind die Zusammenhänge bei der Modulation des Statorflußbetrages dargestellt. In der FIG 3 ist die Maschinendrehkreisfrequenz $\omega$ größer als die identifizierte mittlere Drehkreisfrequen $\hat{\omega}_-$, wogegen in der FIG 4 die Maschinendrehkreisfrequenz $\omega$ kleiner als die identifizierte mittlere Drehkreisfrequenz $\hat{\omega}_-$ ist. Die mittlere Modelldrehzahl $\hat{\omega}_-$ ist im Beispiel jeweils Null. Durch einen Vergleich der Darstellungen der FIG 3 mit der FIG 4 wird deutlich, daß der Wechselanteil $\hat{\omega}_\sim$, der der identifizierten mittleren Drehzahl $\hat{\omega}_-$ überlagert ist, in Abhängigkeit von der auftretenden Drehzahldifferenz $\hat{\omega} - \omega$ zwischen Modell und Maschine der auftretenden Regelabweichung $\Delta_\|$ der Momenten-Blindgrößen BG und $\hat{BG}$ mal nacheilt ($\omega > \hat{\omega}_-$) und einmal voreilt ($\omega < \hat{\omega}_-$). Das Vorzeichen des Phasenwinkels $\xi$ zwischen dieser Regelabweichung $\Delta_\|$ und dem überlagerten Wechselanteil $\hat{\omega}_\sim$ der beobachteten Drehkreisfrequenz $\hat{\omega}$, der über eine Periode der Statorflußbetragsmodulation mit bekannten Methoden ermittelt wird, liefert somit in eindeutiger Weise die Information, ob die identifizierte Drehzahl zu groß oder zu klein ist. Es gilt:

$$\xi < 0,$$

d.h. der Wechselanteil $\hat{\omega}_\sim$ der beobachteten Drehkreisfrequenz $\hat{\omega}$ eilt der Regelabweichung $\Delta\|$ nach. Daraus folgt, daß diese beobachtete Drehkreisfrequenz $\omega$ erhöht werden muß.

$$\xi > 0,$$

d.h. der überlagerte Wechselanteil $\hat{\omega}_\sim$ der beobachteten Drehkreisfrequenz $\hat{\omega}$ eilt der Regelabweichung $\Delta\|$ vor. Daraus folgt, daß diese beobachtete Drehkreisfrequenz $\omega$ erniedrigt werden muß.

Der Spitzenwert $\Delta\|_{max}$ der Regelabweichung $\Delta\|$ der Momenten-Blindgrößen $\hat{BG}$ und BG ist ein Maß für die vorhandene absolute Abweichung zwischen der identifizierten Drehzahl $\hat{\omega}$ und der Maschinendrehzahl $\omega$, so daß mit Hilfe des Ausgleichsreglers 22 die Wechselgröße dieser Regelabweichung $\Delta\|$ ausgeregelt werden kann, wobei das Vorzeichen des Phasenwinkels $\xi$ den Regelsinn bestimmt.

Durch den Einsatz des niederfrequent modulierten Flußbetragssignals $\hat{s}_{FM}$ tritt im Falle einer Differenz zwischen der Modell-Drehkreisfrequenz $\hat{\omega}$ und der Maschinen-Drehkreisfrequenz $\omega$ eine Regelabweichung $\Delta\|$ der Momenten-Blindgrößen $\hat{BG}$ und BG auf, die dabei im wesentlichen einer mit der Modulationsfrequenz $\omega_m$ schwingenden Wechselgröße entspricht. Die Ermittlung des Spitzenwertes $\Delta\|_{max}$, die mit bekannten Methoden erfolgt, wird im dargestellten Beispiel durch ein Abtast-Halte-Glied beschrieben. Durch Multiplikation mit dem negierten Vorzeichen des Phasenverschiebungswinkels $\xi$ zwischen der Regelabweichung $\Delta\|$ und dem Wechselanteil $\hat{\omega}_\sim$ der identifizierten Drehzahl $\hat{\omega}$, der nach bekannten Methoden über eine Periode der Statorflußbetragsmodulation ermittelt wird, wird in eindeutiger weise der Regelsinn festgelegt. Mittels des Umschalters 56 wird dieses Produkt $\Delta\|\xi_m$ zusätzlich zur Drehzahlidentifikation verwendet. Dabei erfolgt die Umschaltung in Abhängigkeit vom Betrag der Modell-Statorfrequenz $\hat{\omega}_S$, der von einem vollständigen Maschinenmodell der Signalverarbeitung 2 ermittelt wird. Diese Größe $\Delta\|\xi_m$ wird zusätzlich zur Drehzahlidentifikation verwendet, indem sie zur Summen-Regelabweichung $\Delta\Sigma$ mittels des Addierers 48 addiert wird.

$$2\% \; \omega_0 < |\hat{\omega}_S| < 100\% \; \omega_0:$$

In diesem Frequenzbereich der Modell-Statorfrequenz $\hat{\omega}_S$ befindet sich der Umschalter 56 in der Position II und der Umschalter 36 anfangs in Position I und dann in Position II und das berechnete Produkt $\Delta\|\xi_m$, aus dem Spitzenwert $\Delta\|_{max}$ der Regelabweichung $\Delta\|$ und dem negierten Vorzeichen wird nicht zusätzlich zur Drehzahlidentifikation, sondern zur Rotorwiderstandsadaption verwendet. Hierbei wird dieser Wert des Produkts $\Delta\|\xi_m$ mit dem weiteren Ausgleichsregler 60 zu Null geregelt dadurch, daß im Maschinenmodell, das Bestandteil der Signalverarbeitung 2 ist, der Parameter Rotorwiderstand $R_r$ verstellt wird. Damit der Ausgleichsregler 60 nur dessen Abweichungen ausregeln muß, ist eine Vorsteuerung vorgesehen. Als Vorsteuergröße ist der Rotorwiderstand $R_{r0}$ der Drehfeldmaschine DM vorgesehen. Durch diese Rotorwiderstandsadaption wird die Drehzahl $\omega$ nicht mehr fehlerhaft identifiziert.

$$|\hat{\omega}_S| > 100\% \; \omega_0$$

In diesem Frequenzbereich der Modell-Statorfrequenz $\hat{\omega}_S$, auch Feldschwächbereich genannt, befinden sich die Umschalter 36 und 56 jeweils in der Position III und dem Ausgleichsregler 22 wird neben der Regelabweichung $\Delta\perp$ die ermittelte Regelabweichung $\Delta\|$ zugeführt. Im Belastungsfall erfolgt bei hohen Drehmomenten eine Ablösung des Eingangssignals des Ausgleichsreglers 22, wodurch vermieden wird, daß die Streckenverstärkung Null wird und aus der Gegenkopplung keine Mitkopplung werden kann. Hierdurch ist sichergestellt, daß in der Nähe des Kippmoments die Drehzahl $\omega$ der Drehfeldmaschine DM eindeutig identifiziert werden kann. Die Ausblendung der einzelnen Regelabweichungen $\Delta\perp$ und $\Delta\|$ erfolgt mittels der Gewichtungsfaktoren K1 und K2, die die Werte Null und Eins annehmen können. Für einen kontinuierlichen Übergang von einer Regelabweichung $\Delta\perp$ zur anderen Regelabweichung $\Delta\|$ als Eingangssignal des Ausgleichsreglers 22 können die Gewichtungsfaktoren K1 und K2 gegenläufig mittels einer stetigen Funktion, insbesondere einer linearen Funktion, zwischen den Werten 1 und 0 sowie 0 und 1 wechseln. In diesem Überlappungsbereich der Gewichtungsfaktoren K1 und K2 wird die Summen-Regelabweichung $\Delta\Sigma$ als Eingangssignal des Ausgleichsreglers 22 verwendet.

Durch diese Weiterbildung des bekannten Verfahrens erhält man nun ein Verfahren, mit dem die Drehzahl $\omega$ einer geberlosen, feldorientiert betriebenen Drehfeldmaschine DM im gesamten Drehzahlbereich identifiziert werden kann, so daß auf eine Drehzahlerfassung auch bei hochwertigen Antrieben verzichtet werden kann. Außerdem wird ein Kippschutz gewährleistet. Ferner werden die Parameter (Stator- und Rotorwiderstand) der Drehfeldmaschine DM, die betriebs- und arbeitspunktabhängig sind, on-line im Maschinenmodell nachgeführt, so daß eine korrekte Drehzahlidentifikation ermöglicht wird.

**Patentansprüche**

1. Verfahren zur Bestimmung einer Drehzahl ($\omega$)) einer geberlosen, feldorientiert betriebenen Drehfeldmaschine (DM), wobei mittels eines vollständigen Maschinenmodells in Abhängigkeit eines Fluß-Sollwertes ($\hat{s_F}$), eines Drehmoment-Sollwertes ($\hat{s_M}$), eines Zwischenkreis-Gleichspannungswertes ($\hat{E_d}$), gemessener Stromrichter-Ausgangsspannungswerte ($\bar{e}_{aM}$, $\bar{e}_{bM}$, $\bar{e}_{cM}$) und Systemparameter ($L_\mu$, $L_\sigma$, $R_S$, $R_r / L_\sigma$, $\omega$) ein Statorstrom-Modellraumzeiger ($\hat{i}_S$) und ein konjugiert komplexen Bezugsraumzeiger ($\underline{T}^*$) berechnet werden, wobei ein ermittelter Statorstrom-Istraumzeiger ($i_S$) und der berechnete StatorstromModellraumzeiger ($\hat{i}_S$) jeweils mit dem konjugiert komplexen Bezugsraumzeiger ($\underline{T}^*$) multipliziert werden und wobei jeweils eine Regelabweichung ($\Delta\perp$ bzw. $\Delta\|$), mittels eines Vergleiches der Imaginäranteile ($\hat{w_G}$, WG) bzw. der Realanteile ($\hat{b_G}$, BG) der gebildeten Produkte gebildet wird,
   wobei die ermittelte Regelabweichung ($\Delta\|$) der Realanteile ($\hat{b_G}$, BG) der gebildeten Produkte mit einem Vorzeichen eines Schätzwertes einer Rotorkreisfrequenz ($\omega_r$) der Drehfeldmaschine (DM) und einem Faktor (K2) und die Regelabweichung ($\Delta\perp$) der Imaginäranteils ($\hat{w_G}$, WG) der gebildeten Produkte mit einem Faktor (K1) gewichtet und anschließend aufsummiert werden und daß diese gewichtete Summen-Regelabweichung ($\Delta\Sigma$) derart zur Verstellung der Modell-Rotorwinkelgeschwindigkeit ($\omega$) verwendet wird, daß die ermittelte Summen-Regelabweichung ($\Delta\Sigma$) zu Null wird.

2. Verfahren nach Anspruch 1,
   **dadurch gekennzeichnet,**
   daß als Flußbetrags-Sollwert ($\hat{s_F}$) ein niederfrequent moduliertes Flußbetragssignal ($\hat{s_{FM}}$) vorgesehen ist, daß ein Vorzeichen eines Phasenverschiebungswinkels ($\xi$) zwischen der identifizierten Modell-Rotorwinkelgeschwindigkeit ($\omega$) und der Regelabweichung ($\Delta\|$) der Realanteile (BG,BG) der gebildeten Produkte ermittelt wird, daß ein Spitzenwert ($\Delta\|_{max}$) dieser Regelabweichung ($\Delta\|$) ermittelt und anschließend mit dem negierten Vorzeichen des Phasenverschiebungswinkels ($\xi$) multipliziert wird und daß dieses gebildete Produkt ($\Delta\|\xi_m$) der ermittelten Summen-Regelabweichung ($\Delta\Sigma$) überlagert wird.

3. Verfahren nach Anspruch 1,
   **dadurch gekennzeichnet,**
   daß als Flußbetrags-Sollwert ($\hat{s_F}$) ein niederfrequent moduliertes Flußbetragssignal ($\hat{s_{FM}}$) vorgesehen ist, daß ein Vorzeichen eines Phasenverschiebungswinkels ($\xi$) zwischen der identifizierten Modell-Rotorgeschwindigkeit ($\omega$) und der Regelabweichung ($\Delta\|$) der Realanteile (BG,BG) der gebildeten Produkte ermittelt wird, daß ein Spitzenwert ($\Delta\|_{max}$) dieser Regelabweichung ($\Delta\|$) ermittelt und anschließend mit dem negierten Vorzeichen des Phasenverschiebungswinkels ($\xi$) multipliziert wird und daß dieses Produkt ($\Delta\|\xi_m$) derart zur Verstellung des Systemparameters Rotorwiderstand ($R_r$) verwendet wird, daß das ermittelte Produkt ($\Delta\|\xi_m$) zu Null wird.

4. Verfahren nach Anspruch 1,
   **dadurch gekennzeichnet,**
   daß die Gewichtungsfaktoren (K1,K2) zwischen Null und Eins gegenläufig variiert werden.

5. Verfahren nach Anspruch 1,
   **dadurch gekennzeichnet,**
   daß im Feldschwächbereich der Drehfeldmaschine (DM) der Gewichtungsfaktor (K1) für die Regelabweichung ($\Delta\perp$) der Imaginäranteile ($\hat{w_G}$, WG) zu hohen Drehmomenten hin zu Null und der Gewichtungsfaktor (K2) für die Regelabweichung ($\Delta\|$) der Realanteile ($\hat{b_G}$, BG) zu Eins gesetzt werden.

6. Verfahren nach Anspruch 4,
   **dadurch gekennzeichnet,**
   daß die Variation der Werte der Gewichtungsfaktoren (K1,K2) mittels einer Funktion in Abhängigkeit von den Beträgen der Modell-Statorfrequenz ($\omega_S$) und der Modell-Rotorfrequenz ($\omega_r$) vorgenommen wird.

7. Verfahren nach Anspruch 2,
   **dadurch gekennzeichnet,**
   daß die Aufschaltung des gebildeten Produkts ($\Delta\|\xi_m$) bei einem Betrag der Modell-Statortrequenz ($\hat{\omega_s}$) kleiner gleich ein paar Prozent der Typenpunktfrequenz ($\omega_0$) der feldorientiert betriebenen Drehfeldmaschine (DM) durchgeführt wird.

8. Verfahren nach Anspruch 3,

**dadurch gekennzeichnet,**
daß die Ausregelung des gebildeten Produkts ($\Delta\|\xi_m$) bei einem Betrag der Modell-Statorfrequenz ($\hat{\omega}_s$) größer gleich ein paar Prozent der Typenpunktfrequenz ($\omega_o$) der feldorientiert betriebenen Drehfeldmaschine (DM) durchgeführt wird.

9. Verfahren nach Anspruch 2 oder 3,
   **dadurch gekennzeichnet,**
   daß das niederfrequent modulierte Flußbetragssignal ($\hat{s}FM$) nur zeitweise aufgeschaltet wird.

10. Vorrichtung zur Durchführung des Verfahrens nach Anspruch 1 mit einer Signalverarbeitung (2), die unter anderem ein vollständiges Maschinenmodell, eine Regelung und einen Modulator enthält, wobei ein Ausgang der Signalverarbeitung (2), an dem der konjugiert komplexe Bezugsraumzeiger ($\underline{T}^*$) ansteht, mit einem Eingang eines ersten und zweiten Multiplizierers (18,20) und ein Ausgang der Signalverarbeitung (2), an dem der Statorstrom-Modellraumzeiger ($\underline{\hat{i}}_S$) ansteht, mit einem zweiten Eingang des ersten Multiplizierers (18) verbunden sind, wobei der zweite Eingang des zweiten Multiplizierers (20) mittels eines Koordinatenwandlers (8) mit einem Ausgang eines Strom-Meßgliedes (6) verbunden ist, wobei die Ausgänge der Multiplizierer (18,20), an denen die Imaginäranteile (WG,WG) der berechneten Produkte anstehen, mit einem Vergleicher (24) verknüpft sind, wogegen die Ausgänge der multiplizieren (18,20), an denen die Realanteile ($\hat{BG}$,BG) der berechneten Produkte anstehen, mit einem weiteren Vergleicher (30) verknüpft sind,
   wobei der Ausgang des Vergleichers (24) mittels eines Multiplizierers (46) mit einem ersten Eingang eines Addierers (44) und der Ausgang des weiteren Vergleichers (30) mittels eines Multiplizierers (42), dem ein Umschalter (36) vorgeschaltet ist, mit einem zweiten Eingang des Addierers (44) verknüpft sind, dessen Ausgang über einen Ausgleichsregler (22) mit einem Parametereingang für die Modell-Rotorwinkelgeschwindigkeit ($\hat{\omega}$) der Signalverarbeitung (2) verknüpft ist und daß ein Ausgang der Signalverarbeitung (2), an dem die Modell-Statorfrequenz ($\omega_s$) ansteht, über einen Betragsbildner (40) mit nachgeschaltetem Steuerglied (38) für den Umschalter (36) mit dem Steuereingang des Umschalters (36) verknüpft ist.

11. Vorrichtung nach Anspruch 10,
    **dadurch gekennzeichnet,**
    daß der Signalverarbeitung (2) ein Signalgeber (64) vorgeschaltet ist, daß der Ausgang des weiteren Vergleichers (30) einerseits mit einer Einrichtung (50) zur Spitzenwerterfassung und andererseits mit einer Einrichtung (52) zur Vorzeichenerfassung eines Phasenverschiebungswinkels ($\xi$) verknüpft sind, daß die Ausgänge dieser Einrichtungen (50,52) mit Eingängen eines Multiplizierers (54) verbunden sind, dessen Ausgang mittels eines weiteren Umschalters (56) mit einem weiteren Addierer (48) verknüpft ist, dessen weiterer Eingang mit dem Ausgang des Addierers (44) und dessen Ausgang mit dem Eingang des Ausgleichsreglers (22) verbunden sind und daß ein Steuereingang des weiteren Umschalters (56) über ein weiteres Steuerglied (58) mit dem Ausgang des Betragsbildners (40) verknüpft ist.

12. Vorrichtung nach Anspruch 10,
    **dadurch gekennzeichnet,**
    daß der Signalverarbeitung (2) ein Signalgeber (64) vorgeschaltet ist, daß der Ausgang des weiteren Vergleichers (30) einerseits mit einer Einrichtung (50) zur Spitzenwerterfassung und andererseits mit einer Einrichtung (52) zur Vorzeichenerfassung eines Phasenverschiebungswinkels ($\xi$) verknüpft sind, daß die Ausgänge dieser Einrichtungen (50,52) mit Eingängen eines Multiplizierers (54) verbunden sind, dessen Ausgang mittels eines weiteren Umschalters (56) mit einem nachgeschalteten weiteren Ausgleichsreglers (60) mit einem Parametereingang für den Modell-Rotorwiderstand ($\hat{R}_r$) der Signalverarbeitung (2) verknüpft ist und daß ein Steuereingang des weiteren Umschalters (56) über ein weiteres Steuerglied (58) mit dem Ausgang des Betragsbildner (40) verbunden ist.

13. Vorrichtung nach Anspruch 13,
    **dadurch gekennzeichnet,**
    daß der Ausgang des weiteren Ausgleichsreglers (60) mit einem Eingang eines Addierers (62) verknüpft ist, an dessen weiteren Eingang ein Vorsteuerwert ($R_{r0}$) für die Rotorwiderstands-adaption ansteht und dessen Ausgang mit dem Parametereingang für den Modell-Rotorwiderstand ($\hat{R}_r$) der Signalverarbeitung (2) verbunden ist.

14. Vorrichtung nach Anspruch 11 oder 12,
    **dadurch gekennzeichnet,**
    daß die Einrichtung (50) zur Spitzenwerterfassung ein AbtastHalte-Glied aufweist.

**15.** Vorrichtung nach Anspruch 11 oder 12,
**dadurch gekennzeichnet,**
daß die Einrichtung (52) zur Vorzeichenerfassung eines Phasenverschiebungswinkels ($\xi$) einen Phasendetektor, einen Vergleicher und einen Invertierer aufweist.

**16.** Vorrichtung nach Anspruch 10,
**dadurch gekennzeichnet,**
daß jeweils als Umschalter (36,56) ein Umschalter mit einer neutralen Stellung vorgesehen ist.

**17.** Vorrichtung nach einem der Ansprüche 10 bis 12,
**dadurch gekennzeichnet,**
daß jeweils als Steuerglied (38,58) ein Komparator vorgesehen ist.

**Claims**

**1.** A method for determining a rotational velocity ($\omega$) of a transducerless polyphase machine (DM) operated in a field-oriented manner, a stator-current model space vector ($\hat{\underline{i}}_s$) and a conjugate complex reference space vector ($\underline{T}^*$) being calculated using a complete machine model as a function of a flux setpoint value (S^F), a torque setpoint value (S^M), an intermediate circuit DC voltage value ($\hat{E}_d$), measured power converter output voltage values ($\bar{e}_{aM}$, $\bar{e}_{bM}$ and $\bar{e}_{cM}$) and system parameters ($L_\mu$, $L_\sigma$, $R_s$, $R_r / L_\sigma$, $\omega$), a measured stator-current actual space vector ($\hat{\underline{i}}_s$) and the calculated stator-current model space vector ($\hat{\underline{i}}_s$) each being multiplied by the conjugate complex reference space vector ($\underline{T}^*$) and, in each case, a system deviation ($\Delta\perp$ or $\Delta\|$) being formed by a comparison of the imaginary components (W^G, WG) and the real components (B^G, BG) of the products formed, wherein the measured system deviation ($\Delta\|$) of the real components (B^G, BG) of the products formed is weighted using a sign of an estimated value of a rotor angular frequency ($\omega_r$) of the polyphase machine (DM) and using a factor (K2), and the system deviation ($\Delta\perp$) of the imaginary component (WG, WG) of the products formed is weighted using a factor (K1), they are then summed, and this weighted total system deviation ($\Delta\Sigma$) is used to adjust the model rotor angular velocity ($\omega$) in such a way that the measured total system deviation ($\Delta\Sigma$) becomes zero.

**2.** Method according to Claim 1, characterized in that a low-frequency modulated flux magnitude signal (S^FM) is provided as the flux magnitude setpoint value (S^F), in that a sign of a phase shift angle ($\xi$) between the identified model rotor angular velocity ($\omega$) and the system deviation ($\Delta\|$) of the real components (B^G, BG) of the products formed is measured, in that a peak value ($\Delta\|_{max}$) of said system deviation ($\Delta\|$) is measured and is then multiplied by the negated sign of the phase shift angle ($\xi$), and in that said product ($\Delta\|\xi_m$) formed is superimposed on the measured total system deviation ($\Delta\Sigma$).

**3.** Method according to Claim 1, characterized in that a low-frequency modulated flux magnitude signal (S^FM) is provided as the flux magnitude setpoint value (S^F), in that a sign of a phase shift angle ($\xi$) between the identified model rotor angular velocity ($\omega$) and the system deviation ($\Delta\|$) of the real components (B^G, BG) of the products formed is measured, in that a peak value ($\Delta\|_{max}$) of said system deviation ($\Delta\|$) is measured and is then multiplied by the negated sign of the phase shift angle ($\xi$), and in that said product ($\Delta\|\xi_m$) is used to adjust the system rotor resistance parameter ($R_r$) in such a way that the measured product ($\Delta\|\xi_m$) becomes zero.

**4.** Method according to Claim 1, characterized in that the weighting factors (K1, K2) are varied between zero and one in a contrary sense.

**5.** Method according to Claim 1, characterized in that, in the field weakening range of the polyphase machine (DM), the weighting factor (K1) for the system deviation ($\Delta\perp$) of the imaginary components (W^G, WG) is set at zero for high torques, and the weighting factor (K2) for the system deviation ($\Delta\|$) of the real components (B^G, BG) is set at one.

**6.** Method according to Claim 4, characterized in that the values of the weighting factors (K1, K2) are varied by means of a function depending on the modulus of the model stator frequency ($\omega_s$) and the model rotor frequency ($\omega_r$).

**7.** Method according to Claim 2, characterized in that the summing of the product formed ($\Delta\|\xi_m$) is carried out at a modulus of the model stator frequency ($\omega_s$) that is less than or equal to a few percent of the type point frequency ($\omega_0$) of the polyphase machine (DM) operated in a field-oriented manner.

8. Method according to Claim 3, characterized in that the product formed $(\Delta\|\xi_m)$ is adjusted for a modulus of the model stator frequency $(\omega_s)$ that is greater than or equal to a few percent of the type point frequency $(\omega_0)$ of the polyphase machine (DM) operated in a field-oriented manner.

9. Method according to Claim 2 or 3, characterized in that the low-frequency modulated flux magnitude signal (S^FM) is turned on only intermittently.

10. A device for carrying out the method according to Claim 1 having a signal processor (2), which contains, inter alia, a complete machine model, a closed-loop controller and a modulator, an output of the signal processor (2), at which the conjugate complex reference space vector $(\underline{T}^*)$ is present, being connected to an input of a first and second multiplier (18, 20), and an output of the signal processor (2), at which the stator-current model space vector $(\hat{\underline{i}}_s)$ is present, being connected to a second input of the first multiplier (18), the second input of the second multiplier (20) being connected to an output of a current measuring element (6) by means of a resolver (8), the outputs of the multipliers (18, 20), at which the imaginary components (W^G, WG) of the calculated products are present, being linked to a comparator (24), whereas the outputs of the multipliers (18, 20), at which the real components (B^G, BG) of the calculated products are present, are linked to a further comparator (30), wherein the output of the comparator (24) is linked to a first input of an adder (44) by means of a multiplier (46) and the output of a further comparator (30), upstream of which a changeover switch (36) is connected, is linked to a second input of the adder (44) by means of a multiplier (42), the output of which adder is linked via a equalizing controller (22) to a parameter input for the model rotor angular velocity $(\hat{\omega})$ of the signal processor (2), and in that an output of the signal processor (2), at which the model stator frequency $(\omega_s)$ is present, is linked to the controller input of the changeover switch (36) via an absolute-value generator (40) having a downstream controlling element (38) for the changeover switch (36).

11. Device according to Claim 10, characterized in that a transducer (64) is connected upstream of the signal processor (2), in that the output of the further comparator (30) is linked, on the one hand, to a device (50) for detecting peak values and, on the other hand, to a device (52) for detecting a sign of a phase shift angle $(\xi)$, in that the outputs of said devices (50, 52) are connected to the inputs of a multiplier (54), whose output is linked, by means of a further changeover switch (56), to a further adder (48), whose further input is connected to the output of the adder (44) and whose output is connected to the input of the equalizing controller (22), and in that a control input of the further changeover switch (56) is linked, via a further controlling element (58), to the output of the modulus generator (40).

12. Device according to Claim 10, characterized in that a transducer (64) is connected upstream of the signal processor (2), in that the output of the further comparator (30) is linked, on the one hand, to a device (50) for detecting the peak value and, on the other hand, to a device (52) for detecting a sign of a phase shift angle $(\xi)$, in that the outputs of said devices (50, 52) are connected to the inputs of a multiplier (54), whose output is linked by means of a further changeover switch (56) to a downstream further equalizing controller (60) having a parameter input for the model rotor resistance $(R_r)$ of the signal processor (2), and in that a control input of the further changeover switch (56) is connected via a further controlling element (58) to the output of the absolute-value generator (40).

13. Device according to Claim 13, characterized in that the output of the further equalizing controller (60) is linked to an input of an adder (62), to whose further input a precontrol value $(R_{r0})$ for adapting the rotor resistance is applied and whose output is connected to the parameter input for the model rotor resistance $(R_r)$ of the signal processor (2).

14. Device according to Claim 11 or 12, characterized in that the device (50) for detecting peak values has a sample-and-hold element.

15. Device according to Claim 11 or 12, characterized in that the device (52) for detecting the sign of a phase shift angle $(\xi)$ has a phase detector, a comparator, and an inverter.

16. Device according to Claim 10, characterized in that, in each case, a changeover switch having a neutral setting is provided as changeover switch (36, 56).

17. Device according to one of Claims 10 to 12, characterized in that, in each case, a comparator is provided as controlling element (38, 58).

**EP 0 937 331 B1**

**Revendications**

1. Procédé pour la détermination d'une vitesse de rotation ($\omega$) d'une machine à champ tournant (DM) fonctionnant sans capteur et avec orientation de champ, dans lequel on calcule au moyen d'un modèle de machine complet, en fonction d'une valeur de consigne de flux (S^F), d'une valeur de consigne de couple (S^M), d'une valeur de tension continue de circuit intermédiaire ($\hat{E}_d$), de valeurs de tension de sortie de convertisseur mesurées ($\bar{e}_{aM}$, $\bar{e}_{bM}$, $\bar{e}_{cM}$) et de paramètres de système ($L_\mu$, $L_\sigma$, $R_s$, $R_r / L_\sigma$, $\omega$), un vecteur spatial de modèle de courant de stator ($\rightarrow \hat{i}_s$) et un vecteur spatial de référence complexe conjugué ($\rightarrow T^*$), on multiplie un vecteur spatial réel de courant de stator déterminé ($\rightarrow i_s$) et le vecteur spatial de modèle de courant de stator calculé ($\rightarrow \hat{i}_s$) à chaque fois par le vecteur spatial de référence complexe conjugué ($\rightarrow T^*$) et dans lequel on forme à chaque fois un écart de réglage ($\Delta\perp$ ou $\Delta\|$) au moyen d'une comparaison des parties imaginaires (W^G, WG) ou des parties réelles (B^G, BG) des produits formés,

   on pondère l'écart de réglage déterminé ($\Delta\|$) des parties réelles (B^G, BG) des produits formés avec un signe d'une valeur estimée d'une fréquence angulaire de rotor ($\hat{\omega}_r$) de la machine à champ tournant (DM) et avec un facteur (K2) et l'écart de réglage ($\Delta\perp$) des parties imaginaires (WG, W^G) des produits formés avec un facteur (K1) et on les additionne ensuite,
   et on utilise cet écart de réglage total pondéré ($\Delta\Sigma$) pour le réglage de la vitesse angulaire de rotor de modèle ($\hat{\omega}$) de telle sorte que l'écart de réglage total déterminé ($\Delta\Sigma$) devienne nul.

2. Procédé selon la revendication 1,
   caractérisé par le fait que
   on prévoit comme valeur de consigne de valeur de flux (S^F) un signal de valeur de flux (S^FM) modulé en basse fréquence, que l'on détermine un signe d'un angle de déphasage ($\xi$) entre la vitesse angulaire de rotor de modèle identifiée ($\hat{\omega}$) et l'écart de réglage ($\Delta\|$) des parties réelles (B^G, BG) des produits formés, que l'on détermine une valeur de pointe ($\Delta\|_{max}$) de cet écart de réglage ($\Delta\|$) et qu'on le multiplie ensuite avec le signe contraire de l'angle de déphasage ($\xi$) et que l'on superpose ce produit formé ($\Delta\|\xi_m$) à l'écart de réglage total déterminé ($\Delta\Sigma$).

3. Procédé selon la revendication 1,
   caractérisé par le fait que
   on prévoit comme valeur de consigne de valeur de flux (S^F) un signal de valeur de flux (S^FM) modulé en basse fréquence, que l'on détermine un signe d'un angle de déphasage ($\xi$) entre la vitesse angulaire de rotor de modèle identifiée ($\hat{\omega}$) et l'écart de réglage ($\Delta\|$) des parties réelles (B^G, BG) des produits formés, que l'on détermine une valeur de pointe ($\Delta\|_{max}$) de cet écart de réglage ($\Delta\|$) et qu'on le multiplie ensuite avec le signe contraire de l'angle de déphasage ($\xi$) et qu'on utilise ce produit ($\Delta\|_{max}$) pour le réglage du paramètre de système résistance de rotor ($R_r$) de telle sorte que le produit déterminé ($\Delta\|_{max}$) devienne nul.

4. Procédé selon la revendication 1,
   caractérisé par le fait que
   on fait varier les facteurs de pondération (K1, K2) en sens contraire entre zéro et un.

5. Procédé selon la revendication 1,
   caractérisé par le fait que,
   dans le domaine à affaiblissement de champ de la machine à champ tournant (DM), on met à zéro le facteur de pondération (K1) pour l'écart de réglage ($\Delta\perp$) des parties imaginaires (W^G, WG) vers de grands couples et à un le facteur de pondération (K2) pour l'écart de réglage ($\Delta\|$) des parties réelles (B^G, BG) .

6. Procédé selon la revendication 4,
   caractérisé par le fait que
   on effectue la variation des valeurs des facteurs de pondération (K1, K2) au moyen d'une fonction en fonction des valeurs absolues de la fréquence de stator de modèle ($\hat{\omega}_s$) et de la fréquence de rotor de modèle ($\hat{\omega}_r$).

7. Procédé selon la revendication 2,
   caractérisé par le fait que
   on effectue l'application du produit formé ($\Delta\|\xi_m$) pour une valeur absolue de la fréquence de stator de modèle ($\hat{\omega}_s$) inférieure à quelques pour-cent de la fréquence de point typique ($\omega_0$) de la machine à champ tournant (DM) fonctionnant avec orientation de champ.

**8.** Procédé selon la revendication 3,
caractérisé par le fait que
on effectue la régulation du produit formé $(\Delta \| \xi_m)$ pour une valeur absolue de la fréquence de stator de modèle $(\hat{\omega}_s)$ supérieure à quelques pour-cent de la fréquence de point typique $(\omega_0)$ de la machine à champ tournant (DM) fonctionnant avec orientation de champ.

**9.** Procédé selon la revendication 2 ou 3,
caractérisé par le fait que
on applique seulement temporairement le signal de valeur de flux $(\hat{SFM})$ modulé en basse fréquence.

**10.** Dispositif pour la mise en oeuvre du procédé selon la revendication 1 avec un traitement de signal (2) qui contient entre autres un modèle de machine complet, une régulation et un modulateur, dans lequel une sortie du traitement de signal (2) à laquelle se trouve le vecteur spatial de référence complexe conjugué $(\rightarrow T^*)$ est reliée à une entrée d'un premier et d'un deuxième multiplicateur (18, 20) et une sortie du traitement de signal (2) à laquelle se trouve le vecteur spatial de modèle de courant de stator $(\rightarrow \hat{i}_s)$ est reliée à une deuxième entrée du premier multiplicateur (18), la deuxième entrée du deuxième multiplicateur (20) est reliée au moyen d'un convertisseur de coordonnées (8) à une sortie d'un élément de mesure de courant (6), les sorties des multiplicateurs (18, 20) auxquelles se trouvent les parties imaginaires $(\hat{WG}, WG)$ des produits calculés sont combinées avec un comparateur (24) tandis que les sorties des multiplicateurs (18, 20) auxquelles se trouvent les parties réelles $(B\hat{G}, BG)$ des produits calculés sont combinées avec un autre comparateur (30),
la sortie du comparateur (24) est combinée au moyen d'un multiplicateur (46) à une première entrée d'un additionneur (44) et la sortie de l'autre comparateur (30) est combinée au moyen d'un multiplicateur (42), du côté amont duquel est branché un commutateur (36), à une deuxième entrée de l'additionneur (44) dont la sortie est combinée par l'intermédiaire d'un régulateur de compensation (22) à une entrée de paramètre pour la vitesse angulaire de rotor de modèle $(\hat{\omega})$ du traitement de signal (2), et dans lequel une sortie du traitement de signal (2) à laquelle se trouve la fréquence de stator de modèle $(\hat{\omega}_s)$ est combinée par l'intermédiaire d'un dispositif de formation de valeur absolue (40), avec un élément de commande branché du côté aval (38) pour le commutateur (36), à l'entrée de commande du commutateur (36).

**11.** Dispositif selon la revendication 10,
caractérisé par le fait que
une machine de signal (64) est branché du côté amont du traitement de signal (2), que la sortie de l'autre comparateur (30) est combinée d'une part à un dispositif (50) pour la détection de valeur de pointe et d'autre part à un dispositif (52) pour la détection de signe d'un angle de déphasage $(\xi)$, que les sorties de ces dispositifs (50, 52) sont reliées à des entrées d'un multiplicateur (54) dont la sortie est combinée au moyen d'un autre commutateur (56) à un autre additionneur (48) dont l'autre entrée est reliée à la sortie de l'additionneur (44) et dont la sortie est reliée à l'entrée du régulateur de compensation (22) et qu'une entrée de commande de l'autre commutateur (56) est combinée par l'intermédiaire d'un autre élément de commande (58) à la sortie du dispositif de formation de valeur absolue (40).

**12.** Dispositif selon la revendication 10,
caractérisé par le fait que
une machine de signal (64) est branché du côté amont du traitement de signal (2), que la sortie de l'autre comparateur (30) est combinée d'une part à un dispositif (50) pour la détection de valeur de pointe et d'autre part à un dispositif (52) pour la détection de signe d'un angle de déphasage $(\xi)$, que les sorties de ces dispositifs (50, 52) sont reliées à des entrées d'un multiplicateur (54) dont la sortie est combinée au moyen d'un autre commutateur (56), avec un autre régulateur de compensation branché du côté aval (60), à une entrée de paramètre pour la résistance de rotor de modèle $(\hat{R}_r)$ du traitement de signal (2) et qu'une entrée de commande de l'autre commutateur (56) est combinée par l'intermédiaire d'un autre élément de commande (58) à la sortie du dispositif de formation de valeur absolue (40).

**13.** Dispositif selon la revendication 13,
caractérisé par le fait que
la sortie de l'autre régulateur de compensation (60) est combinée à une entrée d'un additionneur (62) à l'autre entrée duquel se trouve une valeur de commande préalable $(R_{r0})$ pour l'adaptation de résistance de rotor et dont la sortie est reliée à l'entrée de paramètre pour la résistance de rotor de modèle $(\hat{R}_r)$ du traitement de signal (2).

**14.** Dispositif selon la revendication 11 ou 12,
   caractérisé par le fait que
   le dispositif (50) pour la détection de valeur de pointe comporte un élément d'échantillonnage et de maintien.

**15.** Dispositif selon la revendication 11 ou 12,
   caractérisé par le fait que
   le dispositif (52) pour la détection de signe d'un angle de déphasage ($\xi$) comporte un détecteur de phase, un comparateur et un inverseur.

**16.** Dispositif selon la revendication 10,
   caractérisé par le fait que
   il est prévu à chaque fois comme commutateur (36, 56) un commutateur ayant une position neutre.

**17.** Dispositif selon l'une des revendications 10 à 12,
   caractérisé par le fait que
   il est prévu à chaque fois comme élément de commande (38, 58) un comparateur.

FIG 1

FIG 2

FIG 2A

FIG 2B

FIG 3

FIG 4